# EUROPEAN PATENT SPECIFICATION

(11) **EP 2 713 765 B1**
(45) Date of publication and mention of the grant of the patent: **23.08.2017**
(21) Application number: 12728197.0
(22) Date of filing: 23.05.2012
(51) Int. Cl.: A23G 9/08, A23G 9/28

(54) **APPARATUS FOR PREPARING REFRIGERATED PRODUCTS**
VORRICHTUNG ZUR HERSTELLUNG VON GEKÜHLTEN PRODUKTEN
APPAREIL POUR PRÉPARER DES PRODUITS RÉFRIGÉRÉS

(30) Priority: 24.05.2011 IT BO20110298
(43) Date of publication of application: 09.04.2014
(73) Proprietor: S.P.M. Drink Systems S.P.A., 41057 Spilamberto (MO) (IT)
(72) Inventor: GRAMPASSI, Enrico, I-41057 Spilamberto (MO) (IT)
(74) Representative: Manzella & Associati
(86) International application number: PCT/EP2012/059621
(87) International publication number: WO 2012/160103

(56) References cited:
- EP-A1- 1 380 213
- EP-A1- 2 064 957
- US-A- 5 199 278

## Description

### Technical Field

The present invention regards an apparatus for preparing and dispensing refrigerated products, such as for example creamy ice-creams and the like.

### Background Art

It has been known that apparatuses which enable to instantly prepare and dispense refrigerated products such as creamy ice-creams, sorbets and the like are used.

Such known apparatuses generally comprise a tank suitable to contain the product to be prepared and to be dispensed, in which are arranged a cooling device for cooling the product to a suitable temperature and a mixing device which determines the continuous circulation of the product inside the tank. The circulation device, made for example by a screw member driven in rotation according to an axis longitudinal to the tank, is suitable to convey the refrigerated product towards a front zone, where an apparatus for dispensing the product is arranged. The dispensing apparatus is provided with a closing element which can be operated through an external lever member so as to enable the dispensing of single doses of product, for example in a bowl.

The cited apparatuses are not suitable to fill containers of bigger size, such as common tubs provided to consumers by the ice-cream parlours; such ice-cream tubs are generally produced in different sizes, for containing predetermined quantities of ice-cream, for example starting from a minimum capacity equal to half kilogram. This way of consuming is vice versa highly important in the mentioned field.

### Disclosure

The task of the present invention is that of solving the aforementioned problems, by devising an apparatus for preparing refrigerated products which enables to dispense the product in a quick manner in suitable containers, such as ice-cream tubs and similar.

Within such task, it is a further scope of the present invention that of providing an apparatus easy and safe to use.

Another scope of the present invention is that of providing an apparatus for preparing refrigerated products having a simple making and functional conception, with a surely reliable functioning, with a versatile use, and also relatively inexpensive.

The cited scopes are attained, according to the present invention, by the apparatus for preparing refrigerated products according to claim 1.

According to the present invention, the apparatus for preparing refrigerated products comprises a dispenser device for the product provided with a conveying member applied axially to the containment tank of the product being prepared, communicating with the front zone of such tank, and having an outlet opening directed outwards, for enabling the dispensing of the product to containers like ice-cream tubs and similar.

The dispenser device is provided with a lid for closing said outlet opening of the conveying member which is removable for quickly dispensing the product to a container placed below.

The outlet opening of the conveying device is coaxial to the mixing device arranged inside said containment tank and suitable to determine the continuous circulation of the product inside the same tank, for conveying the product towards the front zone of said tank.

### Description of Drawings

Details of the invention shall be more apparent from the detailed description of a preferred embodiment of the apparatus for preparing and dispensing refrigerated products, illustrated for indicative purposes in the attached drawings, wherein:

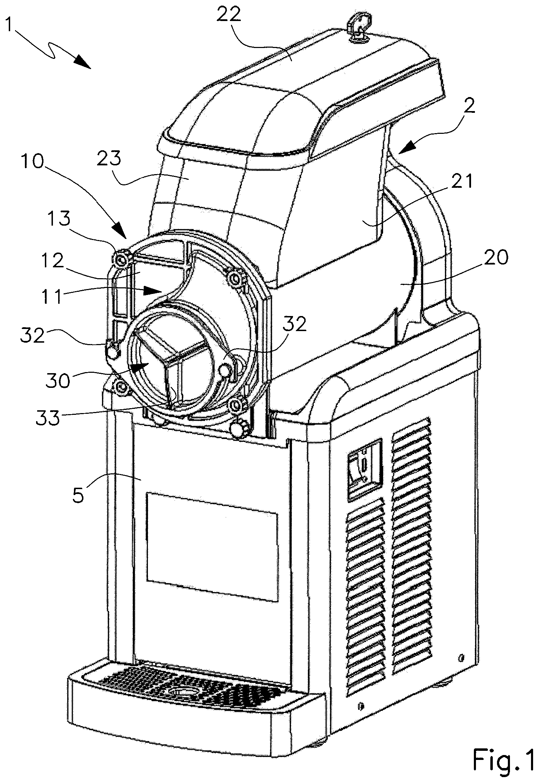

figure 1 shows a perspective view of an apparatus for preparing refrigerated products;

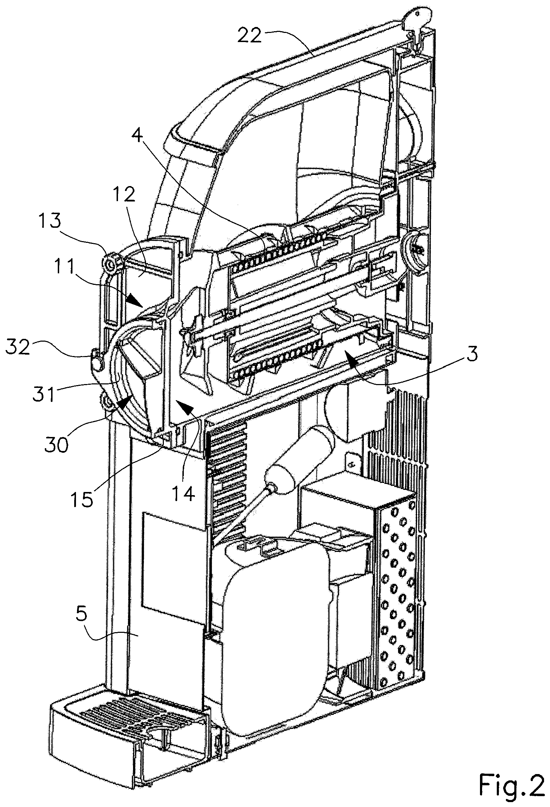

figure 2 shows a section view of the apparatus according to a longitudinal-median plane;
figures 3 and 4 show the same perspective view of the apparatus with removed parts.

### Best Mode

With particular reference to such figures, the apparatus for preparing and dispensing refrigerated products, such as for example creamy ice-creams, sorbets and the like is indicated in its entirety with 1.

The apparatus comprises a containment tank 2 for the product to be dispensed. Inside the containment tank 2 is arranged, in known manner, a mixing device 3 comprising a screw member driven in rotation according to an axis longitudinal to the tank 2 for determining the continuous circulation of the product inside the same tank 2. Furthermore, inside the tank 2 is arranged a cooling device 4 for the cooling of the product to the suitable temperature.

The containment tank 2 is placed above a substantially prism-shaped base body 5. The base body 5 is suitable to contain in its inside the operating members of the apparatus, known per se and not described in further detail.

The containment tank 2 preferably comprises only one piece made through the moulding of plastic transparent materials and has a lower portion 20 having the shape of a cylindrical sector extending along a substantially horizontal axis and an upper portion 21 which extends from the above mentioned cylindrical portion 20; in the lower cylindrical portion 20 is coaxially housed the cited screw member, that is the mixing device 3 which determines the continuous circulation of the product inside the tank 2. The upper portion 21 of the tank 2 is provided in a known manner with an upper opening suitable to be closed by a lid 22. The upper portion 21 of the tank frontally has a front surface 23 inclined inwards the same tank, for driving the product which has interacted with the mixing device 3 backwards, so as to avoid stagnations of the product in the upper corners of the tank. The lid 22, in turn, is provided, above said inclined surface 23, with a curved portion which is an extension of the same inclined surface 23 of the tank, for allowing the product to change its direction in a gradual manner.

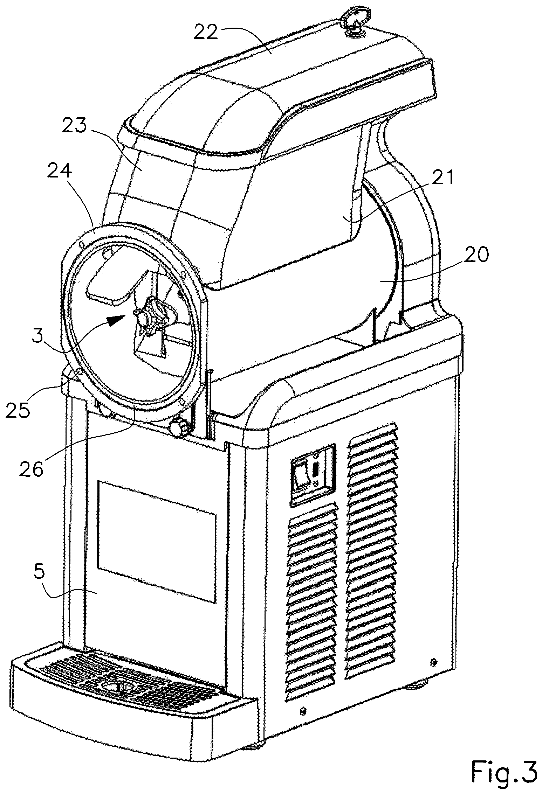

The cylindrical portion 20 of the containment tank 2 is frontally open and shapes along its peripherical edge a flange 24 for attaching a dispenser device 10 for the product (see figure 3).

According to the present invention, the dispenser device 10 comprises a conveying member 11 of tubular shape axially applied to the cylindrical portion 20 of the tank 2, and extending outwards of the tank 2. The conveying member 11 protrudes from a base plate 12 having substantially the same external profile of the flange 24 of the containment tank 2. The base plate 12 is fixed to such flange 24 through suitable screw members 13 which engage suitable housings 25 made in positions angularly distributed in the same flange 24. The flange 24 further has an annular groove 26 for a washer of elastic material suitable to serve as a seal on the opposed surface of the base plate 12.

The conveying member 11 shapes an inner opening 14 open towards the front zone of the tank 2 and an outlet opening 15 directed towards the outside for dispensing the product. The inner opening 14 and the outlet opening 15 have a circular profile and are arranged substantially coaxially to the cylindrical portion 20 of the containment tank 2. The inner opening 14 and the outlet opening 15 have as well wide dimensions, in practice comparable to the inner diameter of the above mentioned cylindrical portion 20 of the containment tank 2. In particular, the inner opening 14 has, at least for a part of itself, a size suitably larger than the outlet opening 15, so as to give the conveying member 11, or a part thereof, a profile convergent according to the outlet direction of the frozen product being dispensed, in order to facilitate the dispensing of the product.

Suitably the circular profile of the outlet opening 15 is tangent to the circular profile of the cylindrical portion 20 of the containment tank 2 at the lower generatrix of the same cylindrical portion 20 of the tank. The outlet opening 15 has diametrical size comparable to that of the cylindrical portion 20 of the tank 2. As an example it is possible to prearrange an outlet opening 15 with a diameter not smaller than one third of the diameter of the cylindrical portion 20 of the tank, so as to allow a huge discharge of frozen product being dispensed.

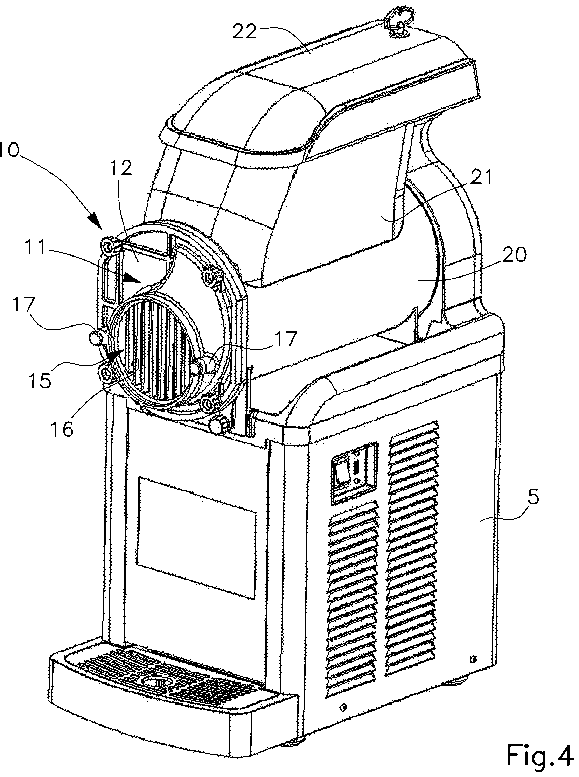

The outlet opening 15 is partially intercepted by a grill 16 for preventing an accidental access to the inside of said tank 2 during the functioning of the apparatus, in particular preventing the introduction of somebody's hand (see figure 4).

The outlet opening 15 is provided with a closure lid 30 removable for the dispensing of the product to a container placed below, as specified hereafter. The lid 30 can be inserted through its peripherical edge 31 inside a housing shaped by the outlet opening 15; on the peripherical edge 31 it is appropriately profiled the housing for a suitable elastic washer suitable to serve as a seal on the inner surface of the outlet opening 15. From the peripherical edge 31 of the lid 30 a couple of hooking means 32 protrude outwards, in diametrically opposed positions, for quickly coupling with corresponding pegs 17 shaped by the conveying member 11 at the edges of the outlet opening 15.

The lid 30 also has a plurality of radial ribs 33 which, besides serving as stiffening ribs, also enable its grip in order to perform in an easy and quick manner the opening and closing operations.

The functioning of the apparatus for preparing refrigerated products, such as creamy ice-creams, sorbets and the like is easily understandable from the preceding description.

After introducing the product in the tank 2, through the upper opening of the tank 2, one can start the preparing cycle. In particular, the cooling device 4 is automatically operated, by setting the suitable working temperatures, and the screw member of the mixing device 3 is operated in rotation at a pre-established speed. Suitably a fitted temperature sensor, arranged inside the tank 2, periodically controls the product temperature.

When requested, the dispensing of the product is operated through the dispenser device 10. To this end, the rotation of the mixing device 3 is firstly stopped. Then the lid 30 which closes the outlet opening 15 of the conveying member 11 is removed; the removal of the lid 30 is easily operated by rotating the same lid of an arc sufficient for determining the disengaging of the hooking means 32 from the respective pegs 17 and then by extracting the lid from the outlet opening 15.

At such point, it is possible to operate the outflow of the product through the conveying member 11 of the dispenser device 10 by operating again the mixing device 3. The product coming out from the outlet opening 15 is collected in a suitable container placed under the same outlet opening 15. In particular the conveying member 11 is able to dispense a relatively great amount of product so as to allow the quick filling of common ice-cream tubs.

When the envisaged amount of product is reached, the dispensing is stopped by stopping the rotation of the mixing device 3, and the lid 30 is again introduced for closing the outlet opening 15. Therefore the mixing device 3 is again driven in rotation for keeping the product characteristics.

The apparatus therefore attains the scope of allowing the quick dispensing of the product in suitable containers, such as ice-cream tubs and similar.

Such result is obtained in particular thanks to the use of a dispenser device 10 provided with a conveying member 11 which enables the dispensing of relatively great amounts of the prepared product, so as to fill in a quick manner a tub of wished size. In practice the conveying member 11 has a section of dimensions comparable with those of the cylindrical portion 20 of the tank 2 in which is housed the product to be dispensed, so that is possible to perform a huge discharge of the product during the dispensing step. This is also supported by the outlet opening 15 being arranged axially to the screw member of the mixing device 3.

The apparatus disclosed for indicative purpose may vary depending on the requirements.

For example it is possible to set the dispensing of the product for being automatically operated for a predetermined time according to the different dimensions of the container to be filled, through suitable managing and electric control means for the different operative steps.

Moreover it is possible to have the conveying member 11 shaped on the frontal surface of the cylindrical portion 20 of the tank 2, that is in practice by constructing on such frontal surface the outlet opening 15 of the product.

In practice, the embodiment of the invention, the materials used, as well as the shape and dimensions, may vary depending on the requirements.

Should the technical characteristics mentioned in each claim be followed by reference signs, such reference signs were included strictly with the aim of enhancing the understanding the claims and hence they shall not be deemed restrictive in any manner whatsoever on the scope of each element identified for exemplifying purposes by such reference signs.

## Claims

1. Apparatus for preparing refrigerated products, comprising a containment tank (2) suitable to contain the product to be prepared; a mixing device (3) arranged inside said tank (2) and suitable to determine the continuous circulation of the product inside the same tank (2), to convey the product towards a front zone of said tank (2); a cooling device (4) arranged inside said tank (2) to cool said product; a dispenser device (10) for the product, placed at said front zone of the containment tank (2), **characterized in that** said dispenser device (10) for the product comprises a conveying member (11) applied axially to said tank (2), communicating with said front zone of the tank (2), and having an outlet opening (15) directed outwards; and a lid (30) for closing said outlet opening (15) of the conveying member (11) which is removable for quickly dispensing the product to a container placed below, said outlet opening (15) of the conveying member (11) being coaxial to said mixing device (3) arranged inside said containment tank (2), **and in that** said conveying member (11) extends, in a tubular shape, between an internal opening (14) opened towards said front zone of the containment tank (2) and said outlet opening (15) directed outwards, said internal opening (14) and said outlet opening (15) having substantially coaxial circular profile, said conveying member (11) having, at least for a part thereof, a profile converging according to the outlet direction of the frozen product being dispensed.

2. Apparatus according to claim 1, **characterized in that** said containment tank (2) has a lower portion (20) having the shape of a cylindrical sector extending along a substantially horizontal axis, said outlet opening (15) of the conveying member (11) being substantially coaxial to said cylindrical portion (20) of the tank (2).

3. Apparatus according to claim 2, **characterized in that** said outlet opening (15) of the conveying member (11) has a circular profile substantially tangent to the circular profile of said cylindrical portion (20) of the containment tank (2) at the lower generatrix of the same cylindrical portion (20).

4. Apparatus according to claim 2, **characterized in that** said cylindrical portion (20) of the containment tank (2) is frontally open and shapes along its peripheral edge a flange (24) for attaching said dispenser device (10) for the product.

5. Apparatus according to claim 2 or 3, **characterized in that** said outlet opening (15) of the conveying member (11) has diametral dimensions comparable with the diametral dimensions of said cylindrical portion (20) of the containment tank (2).

6. Apparatus according to claim 1, **characterized in that** said outlet opening (15) of the conveying member (11) is partially intercepted by a grill (16) to prevent an accidental access to the inside of said tank (2) during the functioning of the same apparatus.

7. Apparatus according to claim 1, **characterized in that** said lid (30) for closing said outlet opening (15) has peripherally, in diametrically opposed positions, hooking means (32) for quickly hooking with corresponding pegs (17) of said conveying member (11).

## Patentansprüche

1. Vorrichtung für die Zubereitung gekühlter Produkte, die eine Rückhaltewanne (2) umfasst, die dazu geeignet ist, das zuzubereitende Produkt zurückzuhalten; eine Mischvorrichtung (3), die im Inneren der genannten Wanne (2) angeordnet ist und die dazu geeignet ist, das kontinuierliche Zirkulieren des Produkts innerhalb der Wanne (2) selbst zu determinieren, um das Produkt zu einem vorderen Bereich der genannten Wanne (2) zu fördern; eine Kühlvorrichtung (4), die im Inneren der genannten Wanne (2) angeordnet ist, um das genannte Produkt zu kühlen; eine Ausgabevorrichtung (10) des Produkts, die in Übereinstimmung mit dem genannten vorderen Bereich der Rückhaltewanne (2) positioniert ist, **dadurch gekennzeichnet, dass** die genannte Ausgabevorrichtung (10) des Produkts ein Förderelement (11) umfasst, das axial zur genannten Wanne (2) angebracht ist, mit dem genannten vorderen Bereich der Wanne (2) kommuniziert und eine Auslassöffnung (15) aufweist, die nach außen gerichtet ist; und einen Deckel (30) zum Verschluss der genannten Auslassöffnung (15) des Förderelements (11), der für die schnelle Ausgabe des Produkts an einen darunter befindlichen Behälter entfernbar ist, wobei die genannte Auslassöffnung (15) des Förderelements (11) koaxial zur genannten Mischvorrichtung (3) ist, die in der genannten Rückhaltewanne (2) angeordnet ist, **und durch die Tatsache, dass** das genannte Förderelement (11) sich rohrförmig zwischen einer inneren Öffnung (14), die in Richtung auf den genannten vorderen Bereich der Rückhaltewanne (2) offen ist, und die genannte Auslassöffnung (15), die nach außen gerichtet ist, ausdehnt, wobei die genannte innere Öffnung (14) und die genannte Auslassöffnung (15) ein im Wesentlichen koaxiales kreisförmiges Profil haben und das genannte Förderelement (11) zumindest zum Teil ein gemäß der Auslassrichtung des auszugebenden gefrorenen Produkts konvergentes Profil hat.

2. Vorrichtung nach Anspruch 1, **dadurch gekennzeichnet, dass** die genannte Rückhaltewanne (2) einen unteren Abschnitt (20) aufweist, der die Form eines zylindrischen Sektors hat, der sich entlang einer im Wesentlichen horizontalen Achse ausdehnt, wobei die genannte Auslassöffnung (15) des Förderelements (11) im Wesentlichen koaxial zum genannten zylindrischen Abschnitt (20) der Wanne (2) ist.

3. Vorrichtung nach Anspruch 2, **dadurch gekennzeichnet, dass** die genannte Auslassöffnung (15) des Förderelements (11) ein kreisförmiges Profil hat, das im Wesentlichen das kreisförmige Profil des genannten zylindrischen Abschnitts (20) der Rückhaltewanne (2) an der unteren Erzeugenden desselben zylindrischen Abschnitts (20) tangiert.

4. Vorrichtung nach Anspruch 2, **dadurch gekennzeichnet, dass** der genannte zylindrische Abschnitt (20) der Rückhaltewanne (2) vorne offen ist und entlang dem peripheren Rand einen Flansch (24) für den Anschluss der genannten Ausgabevorrichtung (10) des Produkts bildet.

5. Vorrichtung nach Anspruch 2 oder 3, **dadurch gekennzeichnet, dass** die genannte Auslassöffnung (15) des Förderelements (11) diametrale Abmessungen hat, die mit denen des genannten zylindrischen Abschnitts (20) der Rückhaltewanne (2) vergleichbar sind.

6. Vorrichtung nach Anspruch 1, **dadurch gekennzeichnet, dass** die genannte Auslassöffnung (15) des Förderelements (11) teilweise durch ein Gitter (16) abgefangen wird, um einen versehentlichen Zugang zum Inneren der genannten Wanne (2) während des Betriebs der Vorrichtung selbst zu verhindern.

7. Vorrichtung nach Anspruch 1, **dadurch gekennzeichnet, dass** der genannte Deckel (30) zum Verschluss der genannten Auslassöffnung (15) am Rand, in diametral entgegengesetzten Positionen, Einhakmittel (32) für das schnelle Einhaken in entsprechende Stifte (17) des genannten Förderelements (11) aufweist.

## Revendications

1. Appareil pour la préparation de produits réfrigérés, comprenant une cuve de confinement (2) apte à contenir le produit à préparer ; un dispositif de mélange (3) disposé à l'intérieur de ladite cuve (2) et apte à déterminer la circulation continue du produit à l'intérieur de la cuve (2) elle-même, afin de transporter le produit vers une zone frontale de ladite cuve (2) ; un dispositif de refroidissement (4) disposé à l'intérieur de ladite cuve (2) pour refroidir ledit produit ; un dispositif de distribution (10) du produit, placé au niveau de ladite zone frontale de la cuve de confinement (2), **caractérisé en ce que** ledit dispositif de distribution du produit (10) comprend un élément de transport (11) appliqué axialement à ladite cuve (2), en communication avec ladite zone frontale de la cuve (2), et ayant une ouverture de sortie (15) tournée vers l'extérieur ; et un couvercle (30) de fermeture de ladite ouverture de sortie (15) de l'élément de transport (11) qui est amovible pour une distribution rapide du produit dans un récipient placé au-dessous, ladite ouverture de sortie (15) de l'élément de transport (11) étant coaxiale audit dispositif de mélange (3) disposé à l'intérieur de ladite cuve de confinement (2), **et en ce que** ledit élément de transport (11) se prolonge, de forme tubulaire, entre une ouverture intérieure (14) ouverte vers ladite zone frontale de la cuve de confinement (2) et ladite ouverture de sortie (15) faisant face vers l'extérieur, ladite ouverture intérieure (14) et ladite ouverture de sortie (15) ayant un profil circulaire sensiblement coaxial, ledit élément de transport (11) comportant, au moins pour une partie de celui-ci, un profil convergent selon le sens de sortie du produit gelé en cours de distribution.

2. Appareil selon la revendication 1, **caractérisé en ce que** ladite cuve de confinement (2) présente une partie inférieure (20) ayant la forme d'un secteur cylindrique se prolongeant le long d'un axe sensiblement horizontal, ladite ouverture de sortie (15) de l'élément de transport (11) étant sensiblement coaxiale avec ladite partie cylindrique (20) de la cuve (2).

3. Appareil selon la revendication 2, **caractérisé en ce que** ladite ouverture de sortie (15) de l'élément de transport (11) présente un profil circulaire sensiblement tangent au profil circulaire de ladite partie cylindrique (20) de la cuve de confinement (2) au niveau de la génératrice inférieure de la même partie cylindrique (20).

4. Appareil selon la revendication 2, **caractérisé en ce que** ladite partie cylindrique (20) de la cuve de confinement (2) est frontalement ouverte et conforme le long du bord périphérique une bride (24) pour la fixation dudit dispositif de distribution (10) du produit.

5. Appareil selon la revendication 2 ou 3, **caractérisé en ce que** ladite ouverture de sortie (15) de l'élément de transport (11) présente des dimensions diamétrales comparables à celles de ladite partie cylindrique (20) de la cuve de confinement (2).

6. Appareil selon la revendication 1, **caractérisé en ce que** ladite ouverture de sortie (15) de l'élément de transport (11) est partiellement interceptée par une grille (16) pour empêcher l'accès accidentel à l'intérieur de ladite cuve (2) pendant le fonctionnement de l'appareil lui-même.

7. Appareil selon la revendication 1, **caractérisé en ce que** ledit couvercle (30) de fermeture de ladite ouverture de sortie (15) présente marginalement, dans des positions diamétralement opposées, des moyens d'accrochage (32) pour un couplage rapide avec des chevilles (17) correspondantes dudit élément de transport (11).
